# EUROPEAN PATENT SPECIFICATION

(11) **EP 3 636 701 B1**
(45) Date of publication and mention of the grant of the patent: **02.03.2022**
(21) Application number: 19201144.3
(22) Date of filing: 02.10.2019
(51) Int. Cl.: C08K 3/22, C08K 5/47, C09J 107/02, C09J 109/10, A63B 39/08

(54) **ADHESIVE FOR TENNIS BALL**
KLEBSTOFF FÜR TENNISBALL
ADHÉSIF POUR BALLE DE TENNIS

(30) Priority: 09.10.2018 JP 2018190883
(43) Date of publication of application: 15.04.2020
(73) Proprietor: Sumitomo Rubber Industries, Ltd., Kobe-shi, Hyogo-ken 651-0072 (JP)
(72) Inventor: HYODO, Takehiko, Kobe-shi, Hyogo 651-0072 (JP); TAGUCHI, Masanori, Kobe-shi, Hyogo 651-0072 (JP); TANAKA, Hiroaki, Kobe-shi, Hyogo 651-0072 (JP); SHIGA, Kazuyoshi, Kobe-shi, Hyogo 651-0072 (JP); SUZUKI, Fumiya, Kobe-shi, Hyogo 651-0072 (JP); MIMURA, Kohei, Kobe-shi, Hyogo 651-0072 (JP); NIWA, Kunio, Kobe-shi, Hyogo 651-0072 (JP)
(74) Representative: Manitz Finsterwald Patent- und Rechtsanwaltspartnerschaft mbB

(56) References cited:
- EP-A1- 1 022 322
- HORIUCHI K ET AL: "Tennis ball with increased ball hardness and reduced deformation - comprising e.g. natural rubber, butadiene! rubber, guanidine-based accelerator and magnesium carbonate filler", WPI / 2017 CLARIVATE ANALYTICS,, vol. 1991, no. 17, 19 March 1991 (1991-03-19), XP002789346,
- DATABASE WPI Week 198250 Thomson Scientific, London, GB; AN 1982-07849J XP002797354, & JP S57 179266 A (SUMITOMO RUBBER IND LTD) 4 November 1982 (1982-11-04)
- DATABASE WPI Week 198329 Thomson Scientific, London, GB; AN 1983-714243 XP002797355, & JP S58 98372 A (SUMITOMO RUBBER IND LTD) 11 June 1983 (1983-06-11)

## Description

This application claims priority on Patent Application Nos. 2018-190883 filed in JAPAN on October 9, 2018 and 2019-133975 filed in JAPAN on July 19, 2019. The entire contents of these Japanese Patent Applications are hereby incorporated by reference.

### BACKGROUND OF THE INVENTION

### Field of the Invention

The present invention relates to adhesives for tennis balls. More specifically, the present invention relates to adhesives used for producing regulation tennis balls.

### Description of the Related Art

A tennis ball includes a core formed from a rubber composition. The core is a hollow sphere. In general, the core is formed by adhering two semi-spherical half cores to each other. The two half cores are adhered to each other by using an adhesive.

During play, a tennis ball is repeatedly hit. A core obtained by using an adhesive having low adhesive strength may be damaged by the repeated hitting. In light of durability, an adhesive for cores need to exhibit sufficient adhesive strength.

In a tennis ball for use in regulation-ball tennis, the interior of the core is filled with compressed gas having a pressure that is higher than atmospheric pressure by 40 kPa to 120 kPa. The tennis ball is also referred to as a pressurized tennis ball (pressure ball). The adhesive for cores of the pressurized tennis balls need to exhibit air-tightness for preventing leakage of the gas in addition to the adhesive strength.

To date, a solvent-based adhesive in which a rubber component, a vulcanizing agent, a vulcanization accelerator, and the like are dissolved in an organic solvent such as naphtha or the like has been used for producing the core, in light of affinity for a rubber composition of the half cores. The two half cores are adhered to each other by using the solvent-based adhesive, and are thereafter heated and pressed, whereby the rubber component in the adhesive is crosslinked. This crosslinking adheres the two half cores to each other to form a hollow core.

In recent years, in light of influence on the environment and reduction of load on workers, various aqueous adhesives have been developed instead of the solvent-based adhesives. JP57-179265 and JP57-179266 disclose, for example, a melton-seaming adhesive in which natural rubber latex or synthetic rubber latex having been depolymerized is used as a base material, for producing tennis balls. In JP58-98372, a melton dumbbell adhesive in which a high-temperature decomposing vulcanizing agent is blended with rubber latex, is suggested.

JP2007-167 discloses a method for producing a tennis ball in which an adhesive layer between a core and a felt portion is formed by using an aqueous composition containing a metal salt of polyacrylic acid. In JP2000-309766, an adhesive, for a tennis ball cover, in which thiuram accelerator and sulfenimide accelerator are blended with natural rubber latex, is suggested.

EP 1 022 322 A1 discloses a tennis ball having a felt cover adhered to a rubber core by means of an aqueous adhesive comprising a styrene-butadiene rubber latex, a natural rubber latex, and aqueous dispersions of zinc oxide, sulfur and N-cyclohexyl-2-benzothiazolesulfenamide.

### SUMMARY OF THE INVENTION

The aqueous adhesive disclosed in JP57-179265, JP57-179266, and JP2007-167 has a thiazole-based or dithiocarbamate vulcanization accelerator blended therein. In the adhesive suggested by JP2000-309766, a thiuram accelerator and a sulfenimide accelerator are used in combination. Curing rates of these aqueous adhesives are very high. Meanwhile, the adhesive suggested by JP58-98372 has morpholine disulfide blended therein as a high-temperature decomposing vulcanizing agent. The curing rate of the aqueous adhesive is very low.

Each of the previously suggested aqueous adhesives is used for adhering melton (felt) onto the outer circumferential surface of the core. For example, in a case where an aqueous adhesive having a high curing rate is used to adhere half cores to each other, the fluidity is reduced early. Therefore, the entirety of the adhesion surfaces of the half cores may not be sufficiently adhered in a close manner to each other. Curing progresses before moisture in the aqueous adhesive evaporates. Therefore, a problem arises that the adhesive strength is reduced due to moisture remaining in the cured adhesive. Also when an aqueous adhesive having a low curing rate is used, adhesive strength may not be sufficiently obtained.

An aqueous adhesive that can exhibit adhesive strength necessary for forming a core of a tennis ball has not been suggested yet. An object of the present invention is to provide an aqueous adhesive, for a core of a tennis ball, which has excellent adhesive strength.

An aqueous adhesive according to the present invention includes rubber latex and a sulfenamide-based vulcanization accelerator, wherein the rubber latex is natural rubber latex and/or synthetic rubber latex, the synthetic rubber in the synthetic rubber latex being styrene-butadiene rubber, acrylonitrile-butadiene rubber, chloroprene rubber, butadiene rubber, isoprene rubber, isobutylene-isoprene rubber, ethylene-propylene rubber, or modified products thereof, and wherein the aqueous adhesive further comprises an inorganic filler in an amount of not less than 10% by weight in terms of a solid content.

The aqueous adhesive according to the present invention has an appropriate curing rate. By the aqueous adhesive, half cores are adhered with sufficient strength. The core obtained by using the aqueous adhesive has excellent durability.

When a solid content in the aqueous adhesive is measured at a temperature of 150°C by a curelastometer in compliance with the method described in JIS K6300-2, a 10% torque time t10 is preferably not shorter than 3 minutes and preferably not longer than 15 minutes, and a ratio (t10/t90) of the 10% torque time t10 to a 90% torque time t90 is preferably not less than 0.60 and preferably not greater than 0.95.

An amount of the sulfenamide-based vulcanization accelerator in the aqueous adhesive is preferably not less than 0.05% by weight and preferably not greater than 5.0% by weight in terms of a solid content. In the aqueous adhesive, a content of sulfur is preferably not less than 0.5% by weight and preferably not greater than 10.0% by weight in terms of a solid content.

The sulfenamide-based vulcanization accelerator is preferably a compound represented by a general formula of R¹-S-N(-R²)-R³, and R¹, R², and R³ each independently represent a hydrogen atom or a linear, branched, or cyclic C3 to C20 alkyl group, an alkyl ether group, an alkylphenyl group, a nitrogen-containing heterocyclic group, a sulfur-containing heterocyclic group, or a nitrogen-and-sulfur-containing heterocyclic group.

The rubber latex is natural rubber latex and/or synthetic rubber latex.

The aqueous adhesive includes an inorganic filler. An The amount of the inorganic filler is preferably not less than 10% by weight and preferably not greater than 40% by weight in terms of a solid content. The inorganic filler is preferably one or more selected from the group consisting of silica, carbon black, calcium carbonate, calcium hydroxide, magnesium hydroxide, talc, mica, diatomaceous earth, titanium oxide, zinc oxide, bismuth oxide, barium sulfate, magnesium carbonate, and alumina.

A solid content concentration of the aqueous adhesive is preferably not less than 3.0% by weight and preferably not greater than 70% by weight. In the aqueous adhesive, a viscosity measured at 23±1°C by using a Brookfield-type rotational viscosimeter is preferably not less than 20 cps and preferably not greater than 20,000 cps. A pH of the aqueous adhesive is preferably not less than 7.0 and preferably not greater than 12.0.

A tennis ball according to the present invention includes a hollow core including two semi-spherical half cores. The two half cores are adhered by using any of the aqueous adhesives described above.

A method for producing an aqueous adhesive according to the present invention includes
(1) adding a dispersant to water and preparing a dispersion medium;
(2) putting and mixing each of a plurality of additives to be blended with rubber latex, into the dispersion medium and thereafter adjusting a pH such that the pH is not less than 8.0 and not greater than 12.0, to obtain a slurry of each additive; and
(3) adding the obtained slurry of each additive to the rubber latex and mixing the slurry and the rubber latex. At least one of the plurality of additives is a sulfenamide-based vulcanization accelerator.

### BRIEF DESCRIPTION OF THE DRAWINGS

FIG. 1 is a partially cutaway cross-sectional view of a tennis ball according to one embodiment of the present invention; and
FIG. 2A and FIG. 2B are each a cross-sectional view illustrating forming of a core of the tennis ball shown in FIG. 1.

### DESCRIPTION OF THE PREFERRED EMBODIMENTS

The following will describe in detail the present invention based on preferred embodiments with reference, where appropriate, to the accompanying drawing.

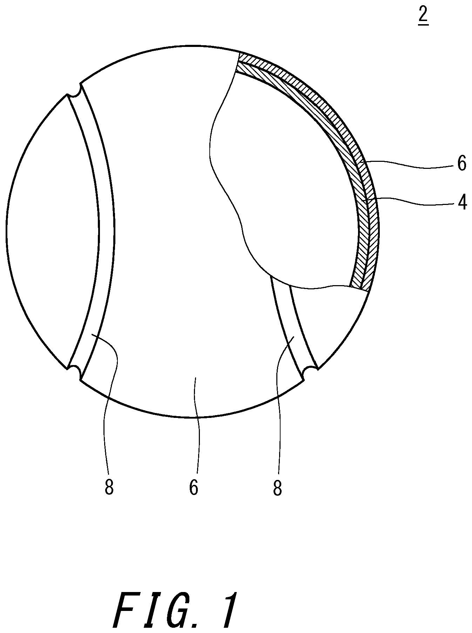

FIG. 1 shows a tennis ball 2 according to one embodiment of the present invention. The tennis ball 2 has a hollow core 4, two felt portions 6 covering the core 4, and a seam portion 8 positioned in the gap between the two felt portions 6. The thickness of the core 4 is normally about 3 mm to 4 mm. The interior of the core 4 is filled with compressed gas. The two felt portions 6 are adhered to the surface of the core 4 by an adhesive.

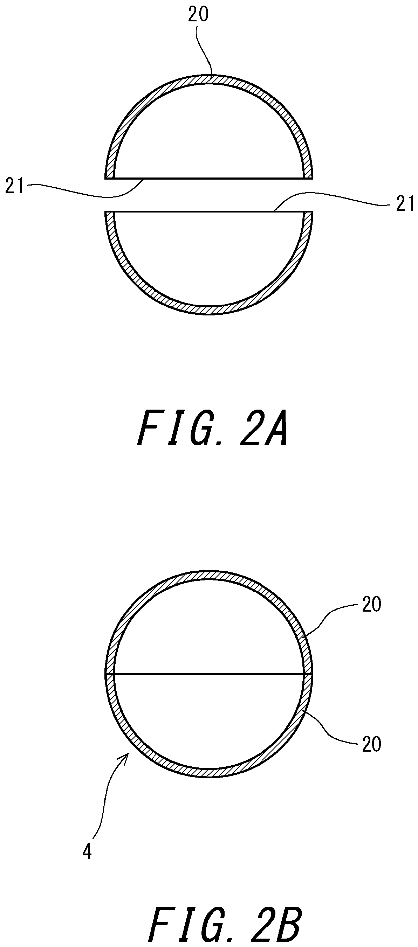

FIGS. 2A and 2B are each a cross-sectional view illustrating forming of the core 4 of the tennis ball 2 shown in FIG. 1. As shown in FIG. 2A, two half cores 20 are firstly prepared in the forming of the core 4. Each half core 20 is semi-spherical-shell-shaped, and has an annular edge portion 21. Next, the aqueous adhesive according to the present invention is applied to the edge portion 21 of each half core 20, and water and tablets of sodium chloride and sodium nitrite are put into one of the half cores 20. Thereafter, as shown in FIG. 2B, the two half cores 20 are adhered to each other at the respective edge portions 21. The spherical body formed from the two half cores 20 is put into a predetermined mold, and heated and pressed, thereby forming the hollow core 4.

The aqueous adhesive of the present invention includes rubber latex and a sulfenamide-based vulcanization accelerator. When the adhesive having been applied to the edge portions 21 is heated and pressed in the forming of the core 4, a volatile component (mainly, moisture) in the adhesive is removed, and crosslinking reaction of the rubber component derived from rubber latex progresses. The adhesive is cured by the crosslinking reaction of the rubber component to join the two half cores 20 to each other, thereby forming the hollow core 4.

In the aqueous adhesive, a time until fluidity is reduced due to progress of the crosslinking reaction of the rubber component, is appropriate. The aqueous adhesive can flow into fine gaps in each of the edge portions 21 before being cured after the half cores 20 are adhered to each other. Thus, close adhesion between the half cores 20 is improved. The adhesive strength can be also improved due to the anchor effect. Furthermore, a volatile component (moisture) is sufficiently removed from the aqueous adhesive before curing. Thereafter, the aqueous adhesive is cured promptly. In the core 4 obtained by using the aqueous adhesive, reduction of the adhesive strength due to remaining of a volatile component (moisture) does not occur.

Preferably, when a solid content in the aqueous adhesive is measured by a curelastometer at the temperature of 150°C in compliance with the method described in JIS K6300-2 "Rubber, unvulcanized-Physical property-Part 2: Determination of cure characteristics with oscillating curemeters", a 10% torque time t10 is not shorter than 3 minutes and not longer than 15 minutes, and a ratio (t10/t90) of the 10% torque time t10 to a 90% torque time t90 is not less than 0.60 and not greater than 0.95. t10 represents a period of time until the minimal value of the torque reaches 10% of the maximal value thereof and t90 represents a period of time until the minimal value of the torque reaches 90% of the maximal value thereof. A method for measuring t10 and t90 will be described below in detail in Examples.

When the 10% torque time t10 is not shorter than 3 minutes and not longer than 15 minutes in the aqueous adhesive, the aqueous adhesive can flow into fine gaps in each of the edge portions 21 before fluidity is reduced due to progress of the crosslinking reaction. Thus, close adhesion between the half cores 20 is improved, and high adhesive strength can be obtained due to the anchor effect. Furthermore, in the aqueous adhesive, a volatile component (moisture) is sufficiently removed before curing. Therefore, reduction of adhesive strength due to remaining of a volatile component (moisture) does not occur.

In light of the close adhesion and the adhesive strength, the 10% torque time t10 is preferably not shorter than 3.1 minutes, more preferably not shorter than 3.2 minutes, and particularly preferably not shorter than 3.3 minutes. In light of production efficiency, the 10% torque time t10 is preferably not longer than 10 minutes.

When the ratio (t10/t90) is not less than 0.60 and not greater than 0.95 in the aqueous adhesive, curing of the aqueous adhesive progresses soon after the half cores 20 closely adhere to each other and the volatile component (moisture) is removed. In the aqueous adhesive, high adhesive strength can be achieved within a short period of time.

In light of the adhesive strength, the ratio (t10/t90) is preferably not less than 0.65, more preferably not less than 0.67, and particularly preferably not less than 0.70. The ratio (t10/t90) is preferably not greater than 0.90.

In the description herein, the rubber latex represents an emulsion in which a rubber component is dispersed in water or an aqueous solution in the form of fine particles. Natural rubber latex and/or synthetic rubber latex can be used.

The synthetic rubber in the synthetic rubber latex can be styrene-butadiene rubber, acrylonitrile-butadiene rubber, chloroprene rubber, butadiene rubber, isoprene rubber, isobutylene-isoprene rubber, ethylene-propylene rubber, and modified products thereof. Examples of the modified product include rubber modified with a functional group such as a carboxyl group, an amine group, a hydroxy group, and the like. In light of the adhesive strength, one or more selected from the group consisting of natural rubber latex, styrene-butadiene rubber, butadiene rubber, and isoprene rubber is preferable, one or more which are selected therefrom so as to include at least natural rubber latex is more preferable, and natural rubber latex is particularly preferable. In light of fluidity and close adhesion, the natural rubber latex is more preferably depolymerized natural rubber latex.

A solid content concentration of the rubber latex is preferably not greater than 80% by weight and more preferably not greater than 70% by weight, in light of miscibility with the slurry of various kinds of additives described below. The solid content concentration of the rubber latex is preferably not less than 20% by weight and more preferably not less than 30% by weight, in light of the adhesive strength.

A sulfenamide-based vulcanization accelerator is blended, as an essential additive, with the aqueous adhesive of the present invention. The sulfenamide-based vulcanization accelerator initially acts as a reaction retarder in the rubber vulcanization reaction, and acts as a reaction accelerator after elapse of a predetermined period of time. The sulfenamide-based vulcanization accelerator can contribute to maintaining of fluidity in an initial stage of adhesion between the half cores 20 and to a high curing rate after elapse of a predetermined period of time.

A preferable example of the sulfenamide-based vulcanization accelerator is a compound represented by a general formula of R¹-S-N(-R²)-R³. In the general formula, R¹, R², and R³ each independently represent a hydrogen atom or a linear, branched, or cyclic C3 to C20 alkyl group, an alkyl ether group, an alkylphenyl group, a nitrogen-containing heterocyclic group, a sulfur-containing heterocyclic group, or a nitrogen-and-sulfur-containing heterocyclic group.

Specific examples of such a compound include N-cyclohexyl-2-benzothiazole sulfenamide, N-tert-butyl-2-benzothiazole sulfenamide, N,N'-dicyclohexyl-2-benzothiazolyl sulfenamide, N-oxydiethylene-2-benzothiazole sulfenamide, N,N-diisopropyl-2-benzothiazole sulfenamide, and N-ethyl-2-benzothiazole sulfenamide. The compound is more preferably one or more selected from the group consisting of N-cyclohexyl-2-benzothiazole sulfenamide, N-tert-butyl-2-benzothiazole sulfenamide, and N-oxydiethylene-2-benzothiazole sulfenamide.

An amount of the sulfenamide-based vulcanization accelerator contained in the aqueous adhesive is preferably not less than 0.05% by weight and more preferably not less than 0.1% by weight in terms of a solid content, in light of the adhesive strength. The amount of the sulfenamide-based vulcanization accelerator contained in the aqueous adhesive is preferably not greater than 5.0% by weight, more preferably not greater than 2.0% by weight, and particularly preferably not greater than 1.0% by weight in terms of a solid content, in light of close adhesion.

The aqueous adhesive may contain a vulcanization accelerator other than the sulfenamide-based vulcanization accelerator as long as the advantageous effects of the present invention are not impaired. Examples of the vulcanization accelerator which can be used in combination include guanidine-based vulcanization accelerators, thiazole-based vulcanization accelerators, thiuram-based vulcanization accelerators, thiourea-based vulcanization accelerators, dithiocarbamate-based vulcanization accelerators, morpholine-based vulcanization accelerators, aldehyde-amine-based vulcanization accelerators, aldehyde-ammonia-based vulcanization accelerators, imidazoline-based vulcanization accelerators, and xanthate-based vulcanization accelerators.

When the sulfenamide-based vulcanization accelerator and another vulcanization accelerator are used in combination, a rate of the sulfenamide-based vulcanization accelerator relative to all the vulcanization accelerators is preferably not less than 80% by weight, more preferably not less than 90% by weight, and particularly preferably not less than 95% by weight.

The aqueous adhesive may contain a vulcanizing agent as appropriate. Preferable examples of the vulcanizing agent include: sulfur such as powdery sulfur, insoluble sulfur, precipitated sulfur, colloidal sulfur, and the like; sulfur compounds such as morpholine disulfide, alkylphenol disulfide, and the like. An amount of the vulcanizing agent in the aqueous adhesive is not particularly limited. However, the amount of the vulcanizing agent is preferably not less than 0.5% by weight and more preferably not less than 0.8% by weight in terms of a solid content, in light of the adhesive strength. The amount of the vulcanizing agent is preferably not greater than 10% by weight in terms of a solid content, in light of an appropriate curing rate.

The aqueous adhesive contains an inorganic filler. Examples of the inorganic filler include silica, carbon black, talc, mica, diatomaceous earth, calcium carbonate, magnesium carbonate, barium sulfate, titanium oxide, zinc oxide, bismuth oxide, and alumina. Two or more kinds of the inorganic fillers may be used in combination. The inorganic filler is preferably one or more selected from the group consisting of silica, titanium oxide, and zinc oxide. The amount of the inorganic filler is not less than 10% by weight in terms of a solid content, in light of adhesion to the edge portions 21. The amount of the inorganic filler is preferably not greater than 40% by weight, more preferably not greater than 35% by weight, and particularly preferably not greater than 30% by weight in terms of a solid content, in light of fluidity at the time of heating.

The aqueous adhesive may contain a vulcanization acceleration aid as appropriate. Preferable examples of the vulcanization acceleration aid include fatty acids such as stearic acid and the like, metal oxides such as zinc oxide and the like, and fatty acid metal salts such as zinc stearate and the like. The aqueous adhesive may further include an additive such as a thickener, a tackifier, an anti-aging agent, an antioxidant, a light stabilizer, a softener, a processing aid, a coloring agent, and the like as long as the advantageous effects of the present invention are not impaired.

A solid content concentration of the aqueous adhesive is not particularly limited as long as the advantageous effects of the present invention are obtained. The solid content concentration is preferably not less than 3.0% by weight, more preferably not less than 5.0% by weight, even more preferably not less than 10% by weight, and particularly preferably not less than 15% by weight, in light of the adhesive strength. The solid content concentration is preferably not greater than 70% by weight and particularly preferably not greater than 60% by weight, in light of fluidity.

The aqueous adhesive preferably contains sulfur. The sulfur may be elemental sulfur or a sulfur atom of a sulfur compound. The sulfur may be sulfur derived from the vulcanizing agent or the vulcanization accelerator. The sulfur contained in the aqueous adhesive can contribute to formation of a crosslinked structure. The half cores 20 are firmly adhered to each other by the adhesive having a high crosslinking density after being cured. In light thereof, a content of the sulfur in the aqueous adhesive is preferably not less than 0.5% by weight, more preferably not less than 1.0% by weight, and particularly preferably not less than 2.0% by weight in terms of a solid content. The content of the sulfur is preferably not greater than 10.0% by weight in light of an appropriate curing rate. In the description herein, the content of the sulfur in the aqueous adhesive is an amount of sulfur element measured according to the oxygen flask combustion method described in GENERAL TESTS, PROCESSES AND APPARATUS in the Japanese Pharmacopoeia 17th Edition.

A viscosity of the aqueous adhesive is preferably not less than 20 cps, more preferably not less than 100 cps, and particularly preferably not less than 200 cps, in light of adhesion to the edge portions 21. The viscosity of the aqueous adhesive is preferably not greater than 20,000 cps, more preferably not greater than 10,000 cps, and particularly preferably not greater than 6,000 cps, in light of application properties and fluidity. The viscosity of the aqueous adhesive is measured by using a Brookfield-type rotational viscosimeter at a measurement temperature of 23±1°C. The measurement method will be described below in detail in Examples.

A pH of the aqueous adhesive is adjusted such that the pH is preferably not less than 7.0 and preferably not greater than 12.0, more preferably not less than 8.0 and more preferably not greater than 11.5, and particularly preferably not less than 9.5 and particularly preferably not greater than 10.5, in light of stability of the latex. The method for measuring the pH will be described below in Examples.

A method for producing the aqueous adhesive according to the present invention includes
(1) adding a dispersant to water and adjusting a dispersion medium,
(2) putting and mixing each of a plurality of additives to be blended with the rubber latex, into the dispersion medium, and thereafter adjusting the pH of the mixture to not less than 8.0 and not greater than 12.0, to obtain a slurry of each additive, and
(3) adding the obtained slurry of each additive to the rubber latex and mixing each slurry and the rubber latex.

In the present invention, at least one of the plurality of additives to be blended with the rubber latex is a sulfenamide-based vulcanization accelerator. In other words, this production method includes adding a slurry of the sulfenamide-based vulcanization accelerator to the rubber latex and mixing the slurry and the rubber latex. The production method may include blending, with the rubber latex, a slurry of a vulcanization accelerator other than the sulfenamide-based vulcanization accelerator as long as the advantageous effects of the present invention are not impaired. Examples of the other additives to be blended with the rubber latex include a vulcanizing agent, a vulcanization acceleration aid, an inorganic filler, a thickener, an anti-aging agent, an antioxidant, a light stabilizer, a softener, a processing aid, and a coloring agent.

The dispersion medium is used for producing the slurry in which each of the plurality of additives is dispersed. The kind of the dispersant is not particularly limited. The dispersant is selected from among anionic, nonionic, and cationic surfactants and used as appropriate according to the kind of the additive and the concentration of the slurry. Examples of the anionic surfactant include a C8 to C20 alkylsulfonate, alkylaryl sulfate, sodium naphthalenesulfonate-formaldehyde condensates, and alkali metal salts of rosin acids. Examples of the nonionic surfactant include aromatic polyglycol ether, polyvinyl alcohol, polyoxyethylene alkyl ether, and polyoxyethylene monostearate. Examples of the cationic surfactant include dilauryldimethylammonium chloride, hexadecyltrimethylammonium chloride, octadecyltrimethylammonium chloride, and dodecyltrimethylammonium chloride. The anionic or nonionic surfactants are preferable. Two or more kinds of the surfactants may be used in combination.

A concentration of the dispersant in the dispersion medium is preferably not less than 0.5% by weight and more preferably not less than 1.0% by weight, in light of stability of the slurry. The concentration of the dispersant in the dispersion medium is preferably not greater than 20% by weight and more preferably not greater than 15% by weight, in light of the adhesive strength of the obtained adhesive.

Preferably, the production method further includes adjusting the pH of the dispersion medium to not less than 8.0 and not greater than 12.0, in light of latex dispersion stability. For example, the dispersion medium may be prepared by dissolving the dispersant in purified water, and thereafter adding thereto ammonia water or the like until a predetermined pH is obtained.

In this production method, each of the plurality of additives is put into the dispersion medium such that each additive has a predetermined solid content concentration, and the pH thereof is adjusted to be not less than 8.0 and not greater than 12.0, and each additive and the dispersion medium are thereafter mixed uniformly by using a ball mill or the like, thereby obtaining the slurry of each additive. Thereafter, the obtained slurry of each additive is added to the rubber latex and uniformly mixed, thereby producing the aqueous adhesive according to the present invention. This production method may further include adding a diluent such as water or the like and adjusting the solid content concentration after the slurry of each additive is blended with the rubber latex.

A preferable material of the core 4 (half cores 20) of the tennis ball 2 according to the present embodiment will be sequentially described below. The material of the core 4 (half cores 20) can be changed as long as the object of the present invention is achieved.

The core 4 is formed by crosslinking a rubber composition. Preferable examples of a base rubber include natural rubber, polybutadiene, polyisoprene, styrene-butadiene copolymers, acrylonitrile-butadiene copolymers, polychloroprene, ethylene-propylene copolymers, ethylene-propylene-diene copolymers, isobutylene-isoprene copolymers, and acrylic rubber. The base rubber is more preferably natural rubber and polybutadiene. Two or more of these rubbers may be used as the base rubber in combination.

In the case where natural rubber and polybutadiene are used in combination, in light of feel at impact, the weight ratio B/N of the amount B of the polybutadiene rubber to the amount N of the natural rubber is preferably not greater than 1.4, more preferably not greater than 1.0, and particularly preferably not greater than 0.4. The entire base rubber may be natural rubber.

The rubber composition of the core 4 may contain a vulcanizing agent and a vulcanization accelerator. The above-described vulcanizing agent and vulcanization accelerator for the aqueous adhesive can be selected and used as appropriate. An amount of each of the vulcanizing agent and the vulcanization accelerator in the rubber composition of the core 4 is adjusted according to the kind. The amount of the vulcanizing agent is preferably not less than 0.5 parts by weight and more preferably not less than 1.0 part by weight per 100 parts by weight of the base rubber, in light of resilience performance. An amount of the vulcanizing agent to be blended is preferably not greater than 5.0 parts by weight. An amount of the vulcanization accelerator to be blended is preferably not less than 1.0 part by weight and more preferably not less than 2.0 parts by weight per 100 parts by weight of the base rubber, in light of resilience performance. An amount of the vulcanization accelerator to be blended is preferably not greater than 6.0 parts by weight.

The rubber composition of the core 4 may further contain a filler. Preferable examples of the filler include talc, kaolin clay, graphite, graphene, bentonite, halloysite, montmorillonite, mica, beidellite, saponite, hectorite, nontronite, vermiculite, illite, allophane, carbon fibers, carbon nanotubes, carbon black, silica, calcium carbonate, magnesium carbonate, and barium sulfate. Talc, kaolin clay, graphite, and graphene are preferable. Two or more thereof may be used in combination.

An amount of the filler in the rubber composition of the core 4 is adjusted as appropriate according to the kind. However, the amount of the filler is preferably not less than 5 parts by weight, more preferably not less than 10 parts by weight, and particularly preferably not less than 15 parts by weight per 100 parts by weight of the base rubber, in light of resilience performance and durability. The amount of the filler is preferably not greater than 120 parts by weight, more preferably not greater than 100 parts by weight, and particularly preferably not greater than 80 parts by weight, in light of feel at impact.

The rubber composition of the core 4 may further include an additive such as a vulcanization aid, an anti-aging agent, an antioxidant, a light stabilizer, a softener, a processing aid, a coloring agent, and the like as long as the advantageous effects of the present invention are not impaired.

As long as the object of the present invention is achieved, the method for producing the rubber composition is not particularly limited. For example, the rubber composition may be produced by heating and pressing a kneaded product obtained by: putting the base rubber and the additive selected as appropriate, into a known kneading machine such as a Banbury mixer, a kneader, a roll, or the like; and kneading these materials therein. The kneading condition and the vulcanization condition are selected according to blending of the rubber composition. The kneading temperature is preferably not lower than 50°C and preferably not higher than 180°C. The vulcanization temperature is preferably not lower than 140°C and preferably not higher than 180°C. The vulcanization time is preferably not shorter than 2 minutes and preferably not longer than 60 minutes.

A method for producing the tennis ball 2 that has the core 4 obtained by using the rubber composition is not particularly limited. For example, the felt portions 6 each of which has been previously cut into a dumbbell shape, has the adhesive applied on the back surface, and has seam glue applied to the cross-sectional surface, are adhered to the surface of the core 4, thereby obtaining the tennis ball 2. Before the felt portions 6 are adhered, the adhesive may be applied to the surface of the core 4.

A known adhesive may be selected and used as appropriate for the adhesion of the felt portions 6 and for the seam glue.

### EXAMPLES

The following will show the effects of the present invention by means of Examples, but the present invention should not be construed in a limited manner on the basis of the description of these Examples.

### [Example 1]

Firstly, 1.6 parts by weight of sodium naphthalenesulfonate-formaldehyde condensate (trade name "Tamol NN9104" manufactured by BASF) and 0.6 parts by weight of aromatic polyglycol ether (trade name "Emulvin WA" manufactured by LANXCESS) were dissolved in 100 parts by weight of purified water, and were adjusted such that the pH was not less than 8.0 and not greater than 12.0 by using commercially available ammonia water (28% by weight), to prepare a dispersion medium. Next, the above-described dispersion medium was added to each of titanium oxide (trade name "A220" manufactured by ISHIHARA SANGYO KAISHA, LTD.), zinc oxide (trade name "Zinc Oxide II" manufactured by SEIDO CHEMICAL INDUSTRY CO., LTD.), sulfur (trade name "SANFEL EX" manufactured by SANSHIN CHEMICAL INDUSTRY CO., LTD.), and a vulcanization accelerator 1 (trade name "SANCELER CM" manufactured by SANSHIN CHEMICAL INDUSTRY CO., LTD.), and the mixture was stirred by using a ball mill for 8 hours or longer and was thereafter adjusted by using the above-described ammonia water such that the pH was not less than 8.0 and not greater than 12.0, to obtain the slurry of titanium oxide (solid content concentration: 40% by weight), the slurry of zinc oxide (solid content concentration: 40% by weight), the slurry of (20% oil-containing) sulfur (solid content concentration: 40% by weight), and the slurry of the vulcanization accelerator 1 (solid content concentration: 20% by weight). Finally, 38 parts by weight of titanium oxide slurry, 8 parts by weight of zinc oxide slurry, 2 parts by weight of sulfur slurry, and 2 parts by weight of slurry of the vulcanization accelerator 1 were added to 100 parts by weight of natural rubber latex (trade name "HYTEX-HA" available from Nomura Trading Co., Ltd., solid content concentration: 60% by weight) and the mixture was uniformly mixed to produce the aqueous adhesive of Example 1.

### [Examples 2 to 19 and Comparative Examples 1 to 6]

Aqueous adhesives of Examples 2 to 19 and Comparative Examples 1 to 6 were each produced in the same manner as in Example 1 except that an amount of each of the latex, the slurry, and purified water to be blended was as indicated below in Tables 1 to 5.

**Table 1 (parts by weight)**

| | Ex.1 | Ex. 2 | Ex. 3 | Ex. 4 | Ex. 5 | Ex. 6 |
|---|---|---|---|---|---|---|
| Latex | | | | | | |
| Natural rubber (60 wt.%) | 100 | 100 | 100 | 100 | 100 | 100 |
| SB rubber (50 wt.%) | 0 | 0 | 0 | 0 | 0 | 0 |
| DPL (50 wt.%) | 0 | 0 | 0 | 0 | 0 | 0 |

| Slurry | | | | | | |
|---|---|---|---|---|---|---|
| Titanium oxide (40 wt.%) | 38 | 38 | 38 | 38 | 38 | 38 |
| Silica (40 wt.%) | 0 | 0 | 0 | 0 | 0 | 0 |
| Zinc oxide (40 wt.%) | 8 | 8 | 8 | 8 | 8 | 8 |
| Sulfur (40 wt.%) | 2 | 6 | 10 | 20 | 1.5 | 25 |
| Vulcanization accelerator 1 (20 wt.%) | 2 | 3 | 5 | 10 | 0.5 | 15 |
| Vulcanization accelerator 2 (20 wt.%) | 0 | 0 | 0 | 0 | 0 | 0 |
| Vulcanization accelerator 3 (20 wt.%) | 0 | 0 | 0 | 0 | 0 | 0 |
| Vulcanization accelerator 4 (40 wt.%) | 0 | 0 | 0 | 0 | 0 | 0 |
| Vulcanization accelerator 5 (20 wt.%) | 0 | 0 | 0 | 0 | 0 | 0 |
| Vulcanization accelerator 6 (20 wt.%) | 0 | 0 | 0 | 0 | 0 | 0 |
| Vulcanization accelerator 7 (20 wt.%) | 0 | 0 | 0 | 0 | 0 | 0 |
| Vulcanization accelerator 8 (20 wt.%) | 0 | 0 | 0 | 0 | 0 | 0 |
| Purified water | 0 | 0 | 0 | 0 | 0 | 0 |
| Total | 150 | 155 | 161 | 176 | 148 | 186 |

**Table 2 (parts by weight)**

| | Ex. 7 | Ex. 8 | Ex. 9 | Ex.10 |
|---|---|---|---|---|
| Latex | | | | |
| Natural rubber (60 wt.%) | 100 | 100 | 100 | 100 |
| SB rubber (50 wt.%) | 0 | 0 | 0 | 0 |
| DPL (50 wt.%) | 0 | 0 | 0 | 0 |

| Slurry | | | | |
|---|---|---|---|---|
| Titanium oxide (40 wt.%) | 38 | 38 | 38 | 38 |
| Silica (40 wt.%) | 0 | 0 | 0 | 0 |
| Zinc oxide (40 wt.%) | 8 | 8 | 8 | 8 |
| Sulfur (40 wt.%) | 6 | 6 | 6 | 6 |
| Vulcanization accelerator 1 (20 wt.%) | 1 | 12 | 0.25 | 20 |
| Vulcanization accelerator 2 (20 wt.%) | 0 | 0 | 0 | 0 |
| Vulcanization accelerator 3 (20 wt.%) | 0 | 0 | 0 | 0 |
| Vulcanization accelerator 4 (40 wt.%) | 0 | 0 | 0 | 0 |
| Vulcanization accelerator 5 (20 wt.%) | 0 | 0 | 0 | 0 |
| Vulcanization accelerator 6 (20 wt.%) | 0 | 0 | 0 | 0 |
| Vulcanization accelerator 7 (20 wt.%) | 0 | 0 | 0 | 0 |
| Vulcanization accelerator 8 (20 wt.%) | 0 | 0 | 0 | 0 |
| Purified water | 0 | 0 | 0 | 0 |
| Total | 153 | 164 | 152 | 172 |

**Table 3 (parts by weight)**

| | Comp. ex. 1 | Comp. ex. 2 | Comp. ex. 3 | Ex.11 | Ex. 12 | Comp. ex.4 |
|---|---|---|---|---|---|---|
| Latex | | | | | | |
| Natural rubber (60 wt.%) | 100 | 100 | 100 | 100 | 100 | 100 |
| SB rubber (50 wt.%) | 0 | 0 | 0 | 0 | 0 | 0 |
| DPL (50 wt.%) | 0 | 0 | 0 | 0 | 0 | 0 |

| Slurry | | | | | | |
|---|---|---|---|---|---|---|
| Titanium oxide (40 wt.%) | 38 | 38 | 38 | 38 | 38 | 38 |
| Silica (40 wt.%) | 0 | 0 | 0 | 0 | 0 | 0 |
| Zinc oxide (40 wt.%) | 8 | 8 | 8 | 8 | 8 | 8 |
| Sulfur (40 wt.%) | 6 | 6 | 6 | 6 | 6 | 0 |
| Vulcanization accelerator 1 (20 wt.%) | 0 | 0 | 0 | 0 | 0 | 0 |
| Vulcanization accelerator 2 (20 wt.%) | 0 | 0 | 0 | 3 | 0 | 0 |
| Vulcanization accelerator 3 (20 wt.%) | 0 | 0 | 0 | 0 | 3 | 0 |
| Vulcanization accelerator 4 (40 wt.%) | 0 | 0 | 0 | 0 | 0 | 20 |
| Vulcanization accelerator 5 (20 wt.%) | 0 | 0 | 0 | 0 | 0 | 0 |
| Vulcanization accelerator 6 (20 wt.%) | 0 | 0 | 0 | 0 | 0 | 0 |
| Vulcanization accelerator 7 (20 wt.%) | 10 | 0 | 0 | 0 | 0 | 0 |
| Vulcanization accelerator 8 (20 wt.%) | 0 | 20 | 0 | 0 | 0 | 0 |
| Purified water | 0 | 0 | 0 | 0 | 0 | 0 |
| Total | 162 | 172 | 152 | 155 | 155 | 166 |

**Table 4 (parts by weight)**

| | Comp. ex. 5 | Comp. ex. 6 | Ex. 13 | Ex.14 | Ex. 15 | Ex. 16 |
|---|---|---|---|---|---|---|
| Latex | | | | | | |
| Natural rubber (60 wt.%) | 100 | 100 | 100 | 100 | 100 | 100 |
| SB rubber (50 wt.%) | 0 | 0 | 0 | 0 | 0 | 0 |
| DPL (50 wt.%) | 0 | 0 | 0 | 0 | 0 | 0 |

| Slurry | | | | | | |
|---|---|---|---|---|---|---|
| Titanium oxide (40 wt.%) | 38 | 38 | 10 | 38 | 38 | 38 |
| Silica (40 wt.%) | 0 | 0 | 20 | 0 | 0 | 0 |
| Zinc oxide (40 wt.%) | 8 | 8 | 8 | 8 | 8 | 8 |
| Sulfur (40 wt.%) | 6 | 0 | 6 | 6 | 6 | 6 |
| Vulcanization accelerator 1 (20 wt.%) | 0 | 0 | 0 | 3 | 3 | 3 |
| Vulcanization accelerator 2 (20 wt.%) | 0 | 0 | 3 | 0 | 0 | 0 |
| Vulcanization accelerator 3 (20 wt.%) | 0 | 0 | 0 | 0 | 0 | 0 |
| Vulcanization accelerator 4 (40 wt.%) | 0 | 0 | 0 | 0 | 0 | 0 |
| Vulcanization accelerator 5 (20 wt.%) | 3 | 0 | 0 | 0 | 0 | 0 |
| Vulcanization accelerator 6 (20 wt.%) | 0 | 20 | 0 | 0 | 0 | 0 |
| Vulcanization accelerator 7 (20 wt.%) | 0 | 0 | 0 | 0 | 0 | 0 |
| Vulcanization accelerator 8 (20 wt.%) | 0 | 0 | 0 | 0 | 0 | 0 |
| Purified water | 0 | 0 | 0 | 500 | 1500 | 2000 |
| Total | 155 | 166 | 147 | 655 | 1655 | 2155 |

**Table 5 (parts by weight)**

| | Ex. 17 | Ex. 18 | Ex. 19 |
|---|---|---|---|
| Latex | | | |
| Natural rubber (60 wt.%) | 100 | 0 | 0 |
| SB rubber (50 wt.%) | 0 | 100 | 0 |
| DPL (50 wt.%) | 0 | 0 | 120 |

| Slurry | | | |
|---|---|---|---|
| Titanium oxide (40 wt.%) | 110 | 38 | 38 |
| Silica (40 wt.%) | 0 | 0 | 0 |
| Zinc oxide (40 wt.%) | 8 | 8 | 8 |
| Sulfur (40 wt.%) | 6 | 6 | 6 |
| Vulcanization accelerator 1 (20 wt.%) | 3 | 3 | 3 |
| Vulcanization accelerator 2 (20 wt.%) | 0 | 0 | 0 |
| Vulcanization accelerator 3 (20 wt.%) | 0 | 0 | 0 |
| Vulcanization accelerator 4 (40 wt.%) | 0 | 0 | 0 |
| Vulcanization accelerator 5 (20 wt.%) | 0 | 0 | 0 |
| Vulcanization accelerator 6 (20 wt.%) | 0 | 0 | 0 |
| Vulcanization accelerator 7 (20 wt.%) | 0 | 0 | 0 |
| Vulcanization accelerator 8 (20 wt.%) | 0 | 0 | 0 |
| Purified water | 0 | 0 | 0 |
| Total | 227 | 155 | 175 |

The details of the compounds listed in Tables 1 to 5 are as follows.

Natural rubber: natural rubber latex, trade name "HYTEX-HA", available from Nomura Trading Co., Ltd. (solid content concentration: 60% by weight)

SB rubber: styrene-butadiene rubber latex manufactured by JSR (solid content concentration: 50% by weight)

DPL: depolymerized natural rubber latex, trade name "DPL-51", manufactured by Regitex (solid content concentration: 50% by weight)

Titanium oxide: trade name "A220" manufactured by ISHIHARA SANGYO KAISHA, LTD.

Silica: trade name "Nipsil VN3" manufactured by TOSOH SILICA CORPORATION

Zinc oxide: trade name "Zinc Oxide II" manufactured by SEIDO CHEMICAL INDUSTRY CO., LTD.

Sulfur: insoluble sulfur, trade name "SANFEL EX", manufactured by SANSHIN CHEMICAL INDUSTRY CO., LTD., containing 20% oil

Vulcanization accelerator 1: N-cyclohexyl-2-benzothiazole sulfenamide (CBS), trade name "SANCELER CM", manufactured by SANSHIN CHEMICAL INDUSTRY CO., LTD.

Vulcanization accelerator 2: N-(t-butyl)-2-benzothiazole sulfenamide (TBBS), trade name "SANCELER NS", manufactured by SANSHIN CHEMICAL INDUSTRY CO., LTD.

Vulcanization accelerator 3: N-oxydiethylene-2-benzothiazole sulfenamide (MBS), trade name "SANCELER NOB", manufactured by SANSHIN CHEMICAL INDUSTRY CO., LTD.

Vulcanization accelerator 4: 4,4'-dithiodimorpholine, trade name "SANFEL R", manufactured by SANSHIN CHEMICAL INDUSTRY CO., LTD.

Vulcanization accelerator 5: zinc diethyldithiocarbamate, trade name "SANCELER EZ", manufactured by SANSHIN CHEMICAL INDUSTRY CO., LTD.

Vulcanization accelerator 6: dipentamethylenethiuram tetrasulfide, trade name "SANCELER TRA", manufactured by SANSHIN CHEMICAL INDUSTRY CO., LTD.

Vulcanization accelerator 7: phthalic anhydride manufactured by Tokyo Chemical Industry Co., Ltd.

Vulcanization accelerator 8: ferric dimethyldithiocarbamate (III), trade name "SANCELER TT-FE", manufactured by SANSHIN CHEMICAL INDUSTRY CO., LTD.

### [Measurement of viscosity]

The viscosity of the aqueous adhesive according to each of Examples 1 to 19 and Comparative Examples 1 to 6 was measured by using a Brookfield-type rotational viscosimeter (TVC-10 viscometer manufactured by TOKI SANGYO CO., LTD.) in compliance with JIS Z8803 "Methods for viscosity measurement of liquid". An average value of values obtained by three measurements at the temperature of 23±1°C at 20 rpm is indicated below as each viscosity (cps) in Tables 6 to 10.

### [Measurement of pH]

A pH of the aqueous adhesive according to each of Examples 1 to 19 and Comparative Examples 1 to 6 was measured at the temperature of 23°C by using a pH meter (TPX-999 manufactured by Toko Chemical Laboratory). An average value of values obtained by three measurements is indicated below as each pH in Tables 6 to 10.

### [Measurement of torque times t10 and t90]

### (Production of test piece)

Firstly, a composition of a solid content contained in the aqueous adhesive of Example 1 was obtained. Natural rubber (trade name "SMR CV60" available from Astlett Rubber Inc.), the above-described titanium oxide, and the above-described zinc oxide were put into a Banbury mixer according to the composition of the solid content, and kneaded at the temperature of 90°C for five minutes. Thereafter, the above-described sulfur and the above-described vulcanization accelerator 1 were added to the obtained kneaded product, and kneaded by using an open roll at the temperature of 50°C for 3 minutes, to produce a test piece to be subjected to a curing test. Similarly, a test piece having the same composition as the solid content contained in the aqueous adhesive according to each of Examples 2 to 18 and Comparative Examples 1 to 6 was produced. The test piece of Example 18 was produced by using a solid SB rubber (trade name "Nipol 1502" manufactured by Zeon Corporation).

The test piece of Example 19 was produced in the following procedure. Firstly, a composition of a solid content contained in the aqueous adhesive of Example 19 was obtained. Natural rubber (trade name "SMR CV60" available from Astlett Rubber Inc.), the above-described titanium oxide, and the above-described zinc oxide were put into a Banbury mixer according to the composition of the solid content, kneaded at the temperature of 90°C for 5 minutes, and thereafter kneaded by using an open roll at the temperature of 50°C for 4 hours. Thereafter, the above-described sulfur and the above-described vulcanization accelerator 1 were added to the obtained kneaded product, and kneaded by using an open roll at the temperature of 50°C for 3 minutes, to obtain a test piece to be subjected to a curing test.

The Mooney viscosity of the obtained kneaded product was measured by using the method described below. As a result of the measurement, the Mooney viscosity was 17.5 M. Meanwhile, the Mooney viscosity of Example 2, in which the composition was the same as that of Example 19 and only the kneading condition before addition of the sulfur and the vulcanization accelerator 1 was different from that of Example 19, was 84.3 M. This indicates that, in the test piece of Example 19, the natural rubber had a reduced molecular weight (depolymerized) due to the kneading being performed by using the open roll at 50°C for 4 hours, and it was confirmed that a rubber component equivalent to the depolymerized natural rubber latex used in Example 19 was formed.

The curing test was performed at the measurement temperature of 150°C at an amplitude angle of ±3° at a frequency of 100 cpm for 60 minutes by using a curelastometer (curelastometer 7 available from JSR Trading Co., LTD.) in compliance with JIS K6300-2 "Rubber, unvulcanized-Physical property-Part 2: Determination of cure characteristics with oscillating curemeters", and a curing rate curve for each test piece was obtained. Based on the obtained curing rate curve, a 10% torque time t10 and a 90% torque time t90 were obtained to calculate the ratio (t10/t90) . The obtained results are indicated below in Tables 6 to 10. For the test piece corresponding to Comparative Example 1, the maximum value of the torque was not reached even after elapse of 60 minutes and the curing test was conducted by changing the test condition.

### [Measurement of Mooney viscosity]

The above-described natural rubber, the above-described titanium oxide, and the above-described zinc oxide were put into a Banbury mixer according to the composition of the solid content according to each of Examples 2 and 19, and kneaded under the above-described kneading condition. Thereafter, the Mooney viscosity (unit M) of each kneaded product was measured before addition of the sulfur and the vulcanization accelerator, in compliance with JIS K6300-1 "Rubber, unvulcanized-Physical property-Part 1: Determination of Mooney viscosity and pre-vulcanization characteristics with Mooney viscometer". A Mooney viscometer (SMV-301 manufactured by SHIMADZU CORPORATION) was used for the measurement. The measurement was conducted under the condition that the measurement temperature was 100°C, preheating was performed for about 1 minute, and the measurement was performed for 4 minutes.

### [Adhesive force]

### (Production of test core)

100 parts by weight of natural rubber (trade name "SMR CV60" available from Astlett Rubber Inc.), 15 parts by weight of carbon black (trade name "N330" manufactured by Cabot Japan K.K.), 4 parts by weight of silica (trade name "Nipsil VN3" manufactured by TOSOH SILICA CORPORATION), 30 parts by weight of kaolin clay (trade name "ECKALITE 120" manufactured by IMERYS), 17 parts by weight of magnesium carbonate (trade name "GOLD-STAR" manufactured by Konoshima Chemical Co., Ltd.), and 5 parts by weight of zinc oxide (trade name "Zinc Oxide II" manufactured by SEIDO CHEMICAL INDUSTRY CO., LTD.) were put into a Banbury mixer and kneaded at 90°C for 5 minutes. 0.5 parts by weight of salicylic acid (manufactured by Tokyo Chemical Industry Co., Ltd.), 2.3 parts by weight of 1,3-diphenylguanidine (trade name "SANCELER D" manufactured by SANSHIN CHEMICAL INDUSTRY CO., LTD.), and 3.5 parts by weight of sulfur (trade name "SANFEL EX" described above) were added to the obtained kneaded product, and kneaded by using an open roll at 50°C for 3 minutes, to obtain a rubber composition.

The obtained rubber composition was put into a mold, and pressed at 140°C for 4 minutes, to form two half cores. The edge portion of each half core was treated with sand paper (#100), and the aqueous adhesive of Example 1 was thereafter applied to the edge portions, and dried at room temperature for 2 hours or longer. Thereafter, 0.5 ml of water was put into one of the half cores, and the one of the half cores was then adhered to the other of the half cores, and the adhered cores were heated at 150°C for 6 minutes, to produce a test core 1. Similarly, the aqueous adhesive according to each of Example 2 to 19 and Comparative Examples 1 to 6 was used to produce test cores 2 to 19 and comparative test cores 1 to 6.

### (Tensile test)

10 dumbbell pieces (thickness of 2 mm) of JIS No. 3 were cut out from each of the test cores 1 to 19 and comparative test cores 1 to 6 as test pieces. At this time, each test piece was cut out such that the adhesion surfaces of the two half cores were located at the center portion of the dumbbell piece.

The tensile test for each test piece was conducted at the tensile speed of 500 mm/minute by using a tensile testing machine (trade name "Autograph AGS-X" manufactured by SHIMADZU CORPORATION), and the cross-section of the test piece after the breakage was observed. For 10 test pieces of each example, the test piece in which a base material was broken (broken at a portion other than the adhesion surface) was evaluated as "good", and the test piece that caused interfacial failure (breakage at any of the edge portions) or cohesive failure (breakage at the adhesive layers) was evaluated as "poor". According to the following evaluation criteria, the adhesive force (adhesive strength) was evaluated. The evaluation results are indicated below in Tables 6 to 10.
A: 9 or more of the test pieces were evaluated as "good adhesion".
B: 8 test pieces were evaluated as "good adhesion."
C: 7 test pieces were evaluated as "good adhesion".
D: 6 or less of the test pieces were evaluated as "good adhesion".

**Table 6**

| | | Ex.1 | Ex.2 | Ex. 3 | Ex. 4 | Ex. 5 | Ex. 6 |
|---|---|---|---|---|---|---|---|
| Solid content concentration | wt.% | 53.1 | 52.5 | 51.8 | 50.2 | 53.4 | 49.1 |
| Content of sulfur | wt.% | 0.93 | 2.54 | 4.13 | 7.79 | 0.64 | 9.55 |
| Sulfenamide-based vulcanization accelerator | wt.% | 0.50 | 0.74 | 1.20 | 2.26 | 0.13 | 3.28 |
| Inorganic filler | wt.% | 23.1 | 22.6 | 22.1 | 20.8 | 23.3 | 20.1 |
| Viscosity | cps | 110 | 115 | 110 | 117 | 110 | 118 |
| pH | | 10.8 | 10.6 | 10.6 | 10.3 | 10.5 | 10.3 |
| t10 | min | 4.2 | 3.6 | 3.4 | 3.3 | 4.7 | 3.3 |
| t90 | min | 5.1 | 4.8 | 4.7 | 4.1 | 5.3 | 3.5 |
| t10/t90 | | 0.82 | 0.75 | 0.72 | 0.80 | 0.89 | 0.94 |
| Adhesive force | | B | A | A | B | C | C |

**Table 7**

| | | Ex. 7 | Ex.8 | Ex. 9 | Ex. 10 |
|---|---|---|---|---|---|
| Solid content concentration | wt.% | 52.9 | 50.7 | 53.1 | 49.3 |
| Content of sulfur | wt.% | 2.43 | 3.01 | 2.39 | 3.41 |
| Sulfenamide-based vulcanization accelerator | wt.% | 0.25 | 2.88 | 0.06 | 4.72 |
| Inorganic filler | wt.% | 22.7 | 22.1 | 22.8 | 21.7 |
| Viscosity | cps | 117 | 112 | 121 | 109 |
| pH | | 10.3 | 10.1 | 10.3 | 10.4 |
| t10 | min | 3.6 | 3.0 | 4.2 | 2.8 |
| t90 | min | 4.9 | 4.5 | 6.9 | 3.8 |
| t10/t90 | | 0.73 | 0.67 | 0.61 | 0.74 |
| Adhesive force | | B | B | C | C |

**Table 8**

| | | Comp ex. 1 | Comp ex. 2 | Comp ex. 3 | Ex. 11 | Ex. 12 | Comp ex. 4 |
|---|---|---|---|---|---|---|---|
| Solid content concentration | wt.% | 51.1 | 49.3 | 53.2 | 52.5 | 52.5 | 52.0 |
| Content of sulfur | wt.% | 2.32 | 4.44 | 2.38 | 2.56 | 2.55 | 2.51 |
| Sulfenamide-based vulcanization accelerator | wt.% | 0.00 | 0.00 | 0.00 | 0.74 | 0.74 | 0.00 |
| Inorganic filler | wt.% | 22.2 | 21.7 | 22.8 | 22.6 | 22.6 | 21.3 |
| Viscosity | cps | 131 | 105 | 111 | 122 | 116 | 100 |
| pH | | 10.1 | 10.4 | 10.8 | 10.6 | 11.2 | 10.1 |
| t10 | min | 17 | 2.4 | 2.9 | 4.2 | 4.7 | 3.6 |
| t90 | min | 148 | 2.5 | 24 | 6 | 7.1 | 29 |
| t10/t90 | | 0.11 | 0.96 | 0.12 | 0.70 | 0.66 | 0.12 |
| Adhesive force | | D | D | D | B | B | D |

**Table 9**

| | | Comp ex.5 | Comp ex. 6 | Ex. 13 | Ex. 14 | Ex. 15 | Ex. 16 |
|---|---|---|---|---|---|---|---|
| Solid content concentration | wt.% | 52.5 | 49.6 | 53.2 | 12.4 | 4.9 | 3.8 |
| Content of sulfur | wt.% | 2.62 | 2.43 | 2.66 | 2.54 | 2.54 | 2.54 |
| Sulfenamide-based vulcanization accelerator | wt.% | 0.00 | 0.00 | 0.77 | 0.74 | 0.74 | 0.74 |
| Inorganic filler | wt.% | 22.6 | 22.3 | 19.4 | 22.6 | 22.6 | 22.6 |
| Viscosity | cps | 160 | 91 | 140 | 74 | 31 | 30 |
| pH | | 11.8 | 11 | 8.5 | 10 | 9.2 | 9.2 |
| t10 | min | 1.2 | 1.4 | 4.2 | 3.6 | 3.6 | 3.8 |
| t90 | min | 2.2 | 2.5 | 5.9 | 4.8 | 4.8 | 5.6 |
| t10/t90 | | 0.55 | 0.56 | 0.71 | 0.75 | 0.75 | 0.68 |
| Adhesive force | | D | D | B | A | B | C |

**Table 10**

| | | Ex. 17 | Ex. 18 | Ex. 19 |
|---|---|---|---|---|
| Solid content concentration | wt.% | 48.5 | 46.1 | 46.5 |
| Content of sulfur | wt.% | 1.87 | 2.89 | 2.54 |
| Sulfenamide-based vulcanization accelerator | wt.% | 0.54 | 0.84 | 0.74 |
| Inorganic filler | wt.% | 42.8 | 25.8 | 22.6 |
| Viscosity | cps | 160 | 121 | 113 |
| pH | | 10.8 | 10.5 | 10.4 |
| t10 | min | 3.4 | 4.3 | 2.8 |
| t90 | min | 5.4 | 6.9 | 4.2 |
| t10/t90 | | 0.63 | 0.62 | 0.67 |
| Adhesive force | | C | B | A |

As indicated in Tables 6 to 10, the aqueous adhesives of the Examples are highly rated as compared to the aqueous adhesives of the Comparative Examples. In Comparative Example 4 and Comparative Example 6, although sulfur was further added in addition to each vulcanization accelerator, an appropriate curing rate was not obtained, and good adhesive force was not obtained. From the evaluation results, advantages of the present invention are clear.

The aqueous adhesive described above is also applicable to production of various hollow balls obtained by using rubber compositions. The foregoing description is in all aspects illustrative, and various modifications can be devised without departing from the essential features of the invention.

## Claims

1. An aqueous adhesive for a tennis ball, the aqueous adhesive comprising rubber latex and a sulfenamide-based vulcanization accelerator, wherein
the rubber latex is natural rubber latex and/or synthetic rubber latex, the synthetic rubber in the synthetic rubber latex being styrene-butadiene rubber, acrylonitrile-butadiene rubber, chloroprene rubber, butadiene rubber, isoprene rubber, isobutylene-isoprene rubber, ethylene-propylene rubber, or modified products thereof, and wherein
the aqueous adhesive further comprises an inorganic filler in an amount of not less than 10% by weight in terms of a solid content.

2. The aqueous adhesive according to claim 1, wherein, when a solid content in the aqueous adhesive is measured at a temperature of 150°C by a curelastometer in compliance with the method described in JIS K6300-2, a 10% torque time t10 is not shorter than 3 minutes and not longer than 15 minutes, and a ratio (t10/t90) of the 10% torque time t10 to a 90% torque time t90 is not less than 0.60 and not greater than 0.95.

3. The aqueous adhesive according to claim 1 or 2, wherein an amount of the sulfenamide-based vulcanization accelerator is not less than 0.05% by weight and not greater than 5.0% by weight in terms of a solid content.

4. The aqueous adhesive according to any one of claims 1 to 3, wherein a content of sulfur is not less than 0.5% by weight and not greater than 10.0% by weight in terms of a solid content.

5. The aqueous adhesive according to any one of claims 1 to 4, wherein the sulfenamide-based vulcanization accelerator is a compound represented by a general formula of R¹-S-N(-R²)-R³, and R¹, R², and R³ each independently represent a hydrogen atom or a linear, branched, or cyclic C3 to C20 alkyl group, an alkyl ether group, an alkylphenyl group, a nitrogen-containing heterocyclic group, a sulfur-containing heterocyclic group, or a nitrogen-and-sulfur-containing heterocyclic group.

6. The aqueous adhesive according to any one of claims 1 to 5, wherein
the amount of the inorganic filler is not greater than 40% by weight in terms of a solid content.

7. The aqueous adhesive according to claim 6, wherein the inorganic filler is one or more selected from the group consisting of silica, carbon black, calcium carbonate, calcium hydroxide, magnesium hydroxide, talc, mica, diatomaceous earth, titanium oxide, zinc oxide, bismuth oxide, barium sulfate, magnesium carbonate, and alumina.

8. The aqueous adhesive according to any one of claims 1 to 7, wherein a solid content concentration is not less than 3.0% by weight and not greater than 70% by weight.

9. The aqueous adhesive according to any one of claims 1 to 8, wherein a viscosity measured at 23±1°C by using a Brookfield-type rotational viscosimeter is not less than 20 cps and not greater than 20,000 cps.

10. The aqueous adhesive according to any one of claims 1 to 9, wherein a pH is not less than 7.0 and not greater than 12.0.

11. A tennis ball comprising
a hollow core including two semi-spherical half cores, wherein
the two half cores are adhered by using the aqueous adhesive according to anyone of claims 1 to 10.

12. A method for producing an aqueous adhesive for a tennis ball, the method comprising:
adding a dispersant to water and preparing a dispersion medium;
putting and mixing each of a plurality of additives to be blended with rubber latex, into the dispersion medium and thereafter adjusting a pH such that the pH is not less than 8.0 and not greater than 12.0, to obtain a slurry of each additive; and
adding the slurry of each additive obtained in the obtaining of the slurry to the rubber latex and mixing the slurry and the rubber latex, wherein
at least one of the plurality of additives is a sulfenamide-based vulcanization accelerator, wherein
the aqueous adhesive is according to any one of claims 1 to 10.

## Patentansprüche

1. Wässriger Klebstoff für einen Tennisball, wobei der wässrige Klebstoff Kautschuklatex und einen Sulfenamid-basierten Vulkanisationsbeschleuniger umfasst, wobei
der Kautschuklatex Naturkautschuklatex und/oder Synthesekautschuklatex ist, wobei der Synthesekautschuk in dem Synthesekautschuklatex Styrol-Butadien-Kautschuk, Acrylnitril-Butadien-Kautschuk, Chloropren-Kautschuk, Butadien-Kautschuk, Isopren-Kautschuk, Isobutylen-Isopren-Kautschuk, Ethylen-Propylen-Kautschuk oder modifizierte Produkte derselben ist, und wobei
der wässrige Klebstoff zudem einen anorganischen Füllstoff in einer Menge von nicht weniger als 10 Gewichtsprozent bezogen auf einen Feststoffgehalt umfasst.

2. Wässriger Klebstoff nach Anspruch 1, wobei, wenn ein Feststoffgehalt in dem wässrigen Klebstoff bei einer Temperatur von 150°C durch ein Curelastometer in Übereinstimmung mit dem in JIS K6300-2 beschriebenen Verfahren gemessen wird, eine 10%-Drehmoment-Zeit t10 nicht kürzer als 3 Minuten und nicht länger als 15 Minuten ist, und ein Verhältnis (t10/t90) der 10%-Drehmoment-Zeit t10 zu einer 90%-Drehmoment-Zeit t90 nicht kleiner als 0,60 und nicht größer als 0,95 ist.

3. Wässriger Klebstoff nach Anspruch 1 oder 2, wobei eine Menge des Sulfenamid-basierten Vulkanisationsbeschleunigers nicht kleiner als 0,05 Gewichtsprozent und nicht größer als 5,0 Gewichtsprozent bezogen auf einen Feststoffgehalt ist.

4. Wässriger Klebstoff nach einem der Ansprüche 1 bis 3, wobei ein Gehalt an Schwefel nicht kleiner als 0,5 Gewichtsprozent und nicht größer als 10,0 Gewichtsprozent bezogen auf einen Feststoffgehalt ist.

5. Wässriger Klebstoff nach einem der Ansprüche 1 bis 4, wobei der Sulfenamid-basierte Vulkanisationsbeschleuniger eine durch eine allgemeine Formel R¹-S-N(-R²)-R³ dargestellte Verbindung ist, und R¹, R² und R³ jeweils unabhängig voneinander ein Wasserstoffatom oder eine lineare, verzweigte oder zyklische C3- bis C20-Alkylgruppe, eine Alkylethergruppe, eine Alkylphenylgruppe, eine stickstoffhaltige heterozyklische Gruppe, eine schwefelhaltige heterozyklische Gruppe oder eine stickstoff- und schwefelhaltige heterozyklische Gruppe darstellen.

6. Wässriger Klebstoff nach einem der Ansprüche 1 bis 5, wobei
die Menge des anorganischen Füllstoffes nicht größer als 40 Gewichtsprozent bezogen auf einen Feststoffgehalt ist.

7. Wässriger Klebstoff nach Anspruch 6, wobei der anorganische Füllstoff einer oder mehrere ist, welche ausgewählt sind aus der Gruppe bestehend aus Siliciumdioxid, Ruß, Calciumcarbonat, Calciumhydroxid, Magnesiumhydroxid, Talk, Glimmer, Kieselgur, Titanoxid, Zinkoxid, Bismutoxid, Bariumsulfat, Magnesiumcarbonat und Aluminiumoxid.

8. Wässriger Klebstoff nach einem der Ansprüche 1 bis 7, wobei eine Feststoffgehaltkonzentration nicht kleiner als 3,0 Gewichtsprozent und nicht größer als 70 Gewichtsprozent ist.

9. Wässriger Klebstoff nach einem der Ansprüche 1 bis 8, wobei eine bei 23±1°C unter Verwendung eines Rotationsviskosimeters vom Brookfield-Typ gemessene Viskosität nicht kleiner als 20 cPs und nicht größer als 20000 cPs ist.

10. Wässriger Klebstoff nach einem der Ansprüche 1 bis 9, wobei ein pH nicht kleiner als 7,0 und nicht größer als 12,0 ist.

11. Tennisball, umfassend:
einen hohlen Kern, der zwei halbkugelförmige Halbkerne enthält, wobei
die zwei Halbkerne unter Verwendung des wässrigen Klebstoffes nach einem der Ansprüche 1 bis 10 verklebt sind.

12. Verfahren zum Herstellen eines wässrigen Klebstoffes für einen Tennisball, wobei das Verfahren umfasst:
Hinzufügen eines Dispergiermittels zu Wasser und Zubereiten eines Dispergiermediums;
Hineingeben und Vermischen von jedem aus einer Mehrzahl an mit dem Kautschuklatex zu vermengenden Additiven in das Dispergiermedium und daraufhin Einstellen eines pH, so dass der pH nicht kleiner als 8,0 und nicht größer als 12,0 ist, um eine Aufschlämmung von jedem Additiv zu erhalten; und
Hinzufügen der beim Erhalten der Aufschlämmung erhaltenen Aufschlämmung von jedem Additiv zu dem Kautschuklatex und Vermischen der Aufschlämmung und des Kautschuklatex, wobei
mindestens eines aus der Mehrzahl an Additiven ein Sulfenamidbasierter Vulkanisationsbeschleuniger ist, wobei
der wässrige Klebstoff gemäß einem der Ansprüche 1 bis 10 ist.

## Revendications

1. Adhésif aqueux pour balle de tennis, l'adhésif aqueux comprenant du latex de caoutchouc et un accélérateur de vulcanisation à base d'un sulfénamide, dans lequel
le latex de caoutchouc est du latex de caoutchouc naturel et/ou du latex de caoutchouc synthétique, le caoutchouc synthétique dans le latex de caoutchouc synthétique étant du caoutchouc styrène butadiène, du caoutchouc acrylonitrile butadiène, du caoutchouc chloroprène, du caoutchouc butadiène, du caoutchouc isoprène, du caoutchouc isobutylène isoprène, du caoutchouc éthylène propylène, ou des produits modifiés de ceux-ci, et dans lequel
l'adhésif aqueux comprend en outre une charge inorganique dans une quantité non inférieure à 10 % en poids, par rapport à une teneur en solides.

2. Adhésif aqueux selon la revendication 1, dans lequel, lorsqu'une teneur en solides dans l'adhésif aqueux est mesurée à une température de 150 °C par un rhéomètre en conformité avec la méthode décrite dans le document JIS K6300-2, une durée de couple de 10 %, t10, n'est pas inférieure à 3 minutes et non supérieure à 15 minutes, et un ratio (t10/t90) d'une durée de couple de 10 %, t10, sur une durée de couple de 90 %, t90, n'est pas inférieure à 0,60 et non supérieure à 0,95.

3. Adhésif aqueux selon la revendication 1 ou la revendication 2, dans lequel une teneur en accélérateur de vulcanisation à base d'un sulfénamide n'est pas inférieure à 0,05 % en poids et non supérieure à 5,0 % en poids, par rapport à une teneur en solides.

4. Adhésif aqueux selon l'une quelconque des revendications 1 à 3, dans lequel une teneur en soufre n'est pas inférieure à 0,5 % en poids et non supérieure à 10,0 % en poids par rapport à une teneur en solides.

5. Adhésif aqueux selon l'une quelconque des revendications 1 à 4, dans lequel l'accélérateur de vulcanisation à base d'un sulfénamide est un composé représenté par une formule générale R¹-S-N(-R²)-R³, et R¹, R², et R³ représentent chacun indépendamment un atome d'hydrogène ou un groupement alkyle en C3 à C20 linéaire, ramifié ou cyclique, un groupement alkyl éther, un groupement alkyl phényle, un groupement hétérocyclique contenant de l'azote, un groupement hétérocyclique contenant du soufre, ou un groupement hétérocyclique contenant de l'azote et du soufre.

6. Adhésif aqueux selon l'une quelconque des revendications 1 à 5, dans lequel la teneur en charge inorganique n'est pas supérieure à 40 % en poids par rapport à une teneur en solides.

7. Adhésif aqueux selon la revendication 6, dans lequel la charge inorganique est une ou plusieurs charges choisies dans le groupe constitué de la silice, du noir de carbone, du carbonate de calcium, de l'hydroxyde de calcium, de l'hydroxyde de magnésium, du talc, du mica, de la terre de diatomées, de l'oxyde de titane, de l'oxyde de zinc, de l'oxyde de bismuth, du sulfate de baryum, du carbonate de magnésium et de l'alumine.

8. Adhésif aqueux selon l'une quelconque des revendications 1 à 7, dans lequel une concentration d'une teneur en solides n'est pas inférieure à 3,0 % en poids et non supérieure à 70 % en poids.

9. Adhésif aqueux selon l'une quelconque des revendications 1 à 8, dans lequel une viscosité mesurée à 23±1 °C en utilisant un viscosimètre rotationnel de type Brookfield n'est pas inférieure à 20 cps et non supérieure à 20 000 cps.

10. Adhésif aqueux selon l'une quelconque des revendications 1 à 9, dans lequel un pH n'est pas inférieur à 7,0 et non supérieur à 12,0.

11. Balle de tennis comprenant
un noyau creux comportant deux demis noyaux semi-sphériques, dans lequel
les deux demis noyaux sont collés en utilisant l'adhésif aqueux selon l'une quelconque des revendications 1 à 10.

12. Procédé de production d'un adhésif aqueux pour une balle de tennis, le procédé comprenant :
l'ajout d'un dispersant à de l'eau et la préparation d'un milieu de dispersion ;
l'ajout et le mélange de chacun d'une pluralité d'additifs pour qu'ils soient mélangés à du latex de caoutchouc, dans le milieu de dispersion et ensuite
l'ajustement d'un pH de sorte que le pH n'est pas inférieur à 8,0 et non supérieur à 12,0, afin d'obtenir une bouillie de chaque additif ; et
l'ajout de la bouillie de chaque additif obtenue lors de l'obtention de la bouille au latex de caoutchouc et le mélange de la bouillie et du latex de caoutchouc, dans lequel
au moins un de la pluralité des additifs est un accélérateur de vulcanisation à base d'un sulfénamide, dans lequel
l'adhésif aqueux est selon l'une quelconque des revendications 1 à 10.
